# EUROPEAN PATENT APPLICATION

(11) **EP 1 202 272 A2**
(43) Date of publication of application: **02.05.2002**
(21) Application number: 01125308.5
(22) Date of filing: 25.10.2001
(51) Int. Cl.: G11B 20/10, G11B 27/30, G11B 27/10, G11B 19/02

(54) **Recording apparatus for information recording medium and recording method**

(30) Priority: 27.10.2000 JP 2000328554
(71) Applicant: MATSUSHITA ELECTRIC INDUSTRIAL CO., LTD., Kadoma-shi, Osaka 571-8501 (JP)
(72) Inventor: Horii, Noriaki, Osaka-shi, Osaka 532-0022 (JP); Yamamoto, Masaya, Hirakata-shi, Osaka 573-1151 (JP); Shimbo, Masatoshi, Kawanishi-shi, Hyogo 666-0152 (JP)
(74) Representative: Balsters, Robert

(57) **Abstract**

There is provided a recording apparatus for recording first audio information (song 61) including a first audio content (65) in an information recording medium (55) which can store a plurality of audio contents (65,66) having a plurality of different audio properties, the information recording medium containing audio information (song 62) including a second audio content (66), wherein the recording apparatus includes: a conversion section for converting an audio property of soundless information (67) of the first audio information into the same audio property as the audio property of the second audio information; and a recording section for recording the soundless information (68) in the information recording medium as a part of the second audio information (song 64) so as to be adjacent to a tail of the second audio content, and recording thr first audio content in the information recording medium.

## Description

### BACKGROUND OF THE INVENTION

### 1. FIELD OF THE INVENTION:

The present invention relates to a recording apparatus for recording a plurality of audio information which have different audio properties on a rewritable information recording medium or a write once type information recording medium.

### 2. DESCRIPTION OF THE RELATED ART:

Conventionally, in a compact disc (CD), soundless information of several seconds is stored in "Index 0" which indicates an interval between songs that is provided at the head of each song. However, in the specifications of minidisks (MDs), such "Index 0" is not defined as a specification.

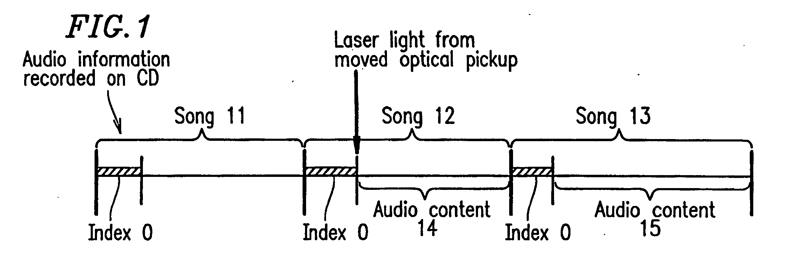

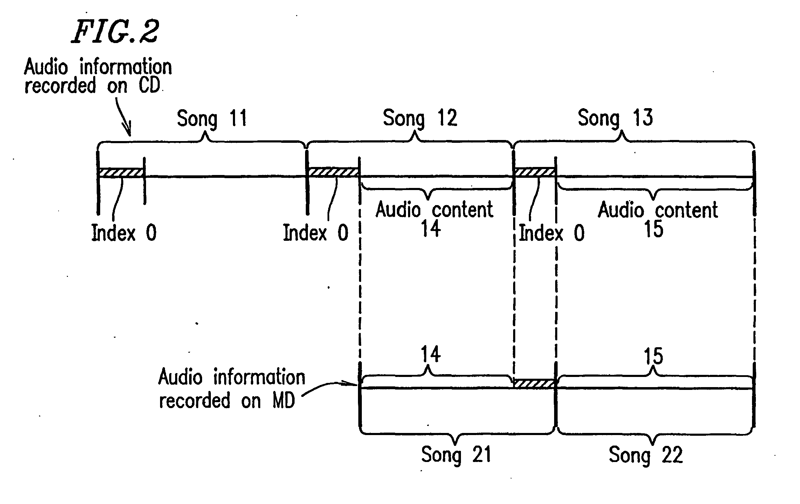

Copying of songs from a CD into a MD is described with reference to Figures **1** and **2**. Herein, a "song" means audio information including at least an audio content. Preferably, a "song" is audio information which includes an audio content and intermission information adjacent to the head or tail of the audio content. The intermission information represents an interval between songs and is usually included in Index 0.

When copying songs from a CD into a MD, a user selects a song that he/she desires to copy into a MD (in Figure **1**, a song **12** and a song **13**) by using a remote controller or the like. Next, the user directs with a remote controller or the like a recording apparatus to start copying the song **12** and the song **13.** In many recording apparatuses, in response to such a direction, an optical pickup moves such that laser light is incident on the end of Index 0 included in the song **12**, and then, reading of audio information of the song **12** and the song **13** is started. In this case, as shown in Figure **2**, intermission information included in Index 0 of the song **12** is not read out whereas an audio content **14** of the song **12** and Index **0** and an audio content **15** of the song **13** are read out from the CD so as to be recorded on the MD. As shown in Figure **2**, in many information apparatuses, intermission information included in Index 0 of the song **13** is copied at the end of a song **21** as a part thereof. Thus, when copying songs from a CD into a MD, in many cases, soundless information included in Index 0 of a song is copied as a part of a previous song at the tail of the previous song.

In the DVD-Audio specifications established as application specifications of digital versatile discs (DVDs), recording of audio contents having various audio properties is allowed. For example, sampling frequencies of 44.1 kHz, 48 kHz, 88.2 kHz, 96 kHz, 176.4 kHz, and 192 kHz, and quantization bits of length 16 bits, 20 bits, and 24 bits are supported by the DVD-Audio specifications. Thus, according to the DVD-Audio specifications, a plurality of songs having different audio properties can be recorded in a single recording medium. Also in the DVD-Audio specifications, as in a CD, soundless information which indicates an interval between songs can be stored in Index 0.

As high-density rewritable or write once type information recording medium, a DVD-R disc, a DVD-RAM disc, and a DVD-RW disc have been developed. Audio contents based on the DVD-Audio specifications can be recorded on a DVD-R disc, a DVD-RAM disc, and a DVD-RW disc for the purpose of making a backup copy, or any other like purpose.

A typical example of recording of audio contents into a rewritable or write once type information recording medium is a copying of audio contents from a packaged medium, such as a DVD-Audio disc, a CD, etc. Problems involved in copying of audio contents from a DVD-Audio disc or a CD into an information recording medium and problems involved in reproduction of audio contents recorded in an information recording medium are described.

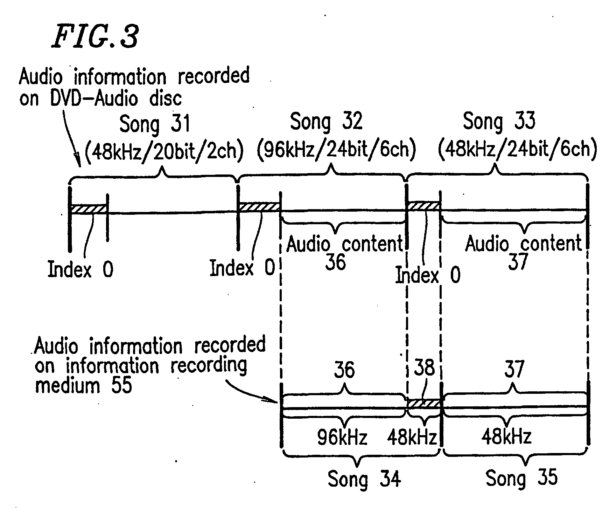

In the first place, copying and reproducing of audio contents from a DVD-Audio disc are described. Referring to Figure **3**, copying of an audio content **36** and an audio content **37** from a DVD-Audio disc into an information recording medium **55** by using the same method as that used for copying songs from a CD into a MD is described. Under the DVD-Audio specifications, a plurality of songs having different audio properties may be mixedly stored in a single DVD-Audio disc. In the example shown in Figure **3**, the DVD-Audio disc sequentially stores a song **31**, a song 32, and a song **33,** which have different audio properties from one another. When the song **32** and the song **33** are copied from the DVD-Audio disc to the information recording medium **55** by using the same method as that used for copying songs from a CD into a MD, intermission information included in Index 0 of the song **33** is copied as a part of a song **34** at the tail thereof. In this case, the sampling frequency of the audio content **36** of the song **34** is **96** kHz while the sampling frequency of the intermission information **38** copied at the tail of the song **34** is **48** kHz. Thus, the song **34** mixedly includes a plurality of information of different audio properties. When reproducing the song **34** containing such information, it is necessary to change reproduction conditions of the reproduction apparatus according to the change of audio properties at a transition point from the audio content **36** to the intermission information **38.** Some reproduction apparatuses cannot follow the change of audio properties so that a mute period or noise is caused during the reproduction of the song **34**. Alternatively, when reproduction is started with a song **35** after a searching operation, an optical pickup of the reproduction apparatus moves so as to read information from the head of the song **35**. In this case, if the audio properties of the song **35** are different from those of a song reproduced immediately before the reproduction of the song **35,** the reproduction apparatus needs to change its reproduction conditions such that the song **35** can be appropriately reproduced. In this case also, if the reproduction apparatus cannot appropriately change the reproduction conditions according to the change of audio properties, a mute period or noise is caused during the reproduction of the song **35,** so that a beginning portion of the song **35** cannot be appropriately reproduced.

Index 0 of the DVD-Audio disc is also information which indicates the presence of an interval between songs. Thus, when copying songs from the DVD-Audio disc to the information recording medium **55,** it is desirable to record information indicating an interval between songs at the head of each of the copied songs.

According to a recording method, when copying songs from the DVD-Audio disc to the information recording medium **55**, in response to the start of reproduction of a song, a recording apparatus automatically starts recording audio information read from the DVD-Audio disc by the reproduction apparatus. When this recording method is used, in many reproduction apparatuses, an optical pickup is moved to reproduce a selected song such that laser light is incident on the end of Index 0 of the selected song. Thus, intermission information included in Index 0 of the selected song is not copied into the information recording medium **55.**

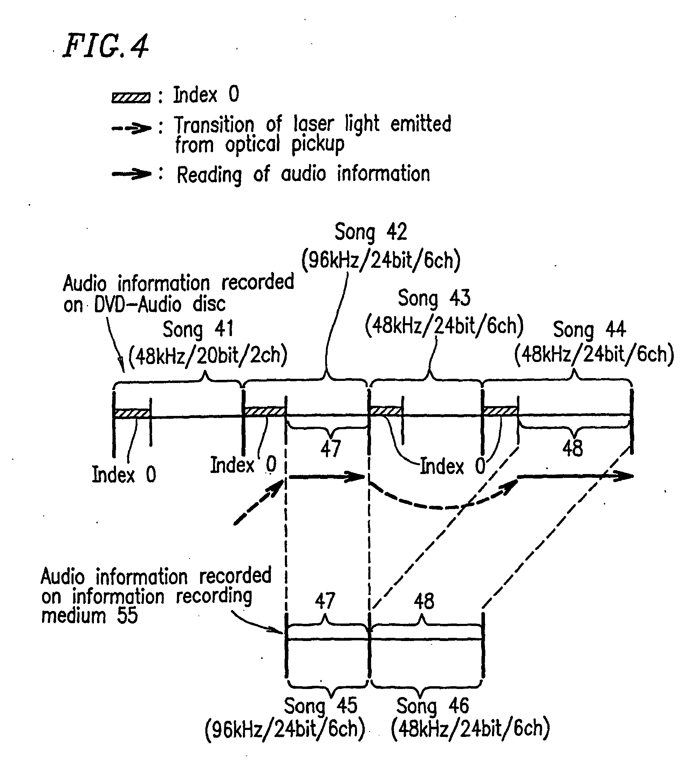

Copying of a song **42** and a song **44** recorded on a DVD-Audio disc into an information recording medium **55** is described with reference to Figure **4**. In the first place, a reproduction apparatus moves its optical pickup such that laser light is incident on the end of Index 0 of the song **42** so as to read an audio content **47** of the song **42.** The read audio content **47** is recorded on the information recording medium **55.** After reading of the song **42** is completed, the reproduction apparatus moves the optical pickup such that the laser light is incident on the end of Index 0 of the song **44** so as to read an audio content **48** of the song **44.** Similarly, the read audio content **48** is recorded on the information recording medium **55.** In the example illustrated in Figure **4,** the audio properties of a song **45** are different from those of a song **46.** Thus, in order to sequentially reproduce the song **45** and the song **46,** the reproduction apparatus needs to change its reproduction conditions at the transition point from the song **45** to the song **46** so as to conform to the audio properties of the song **46.** In this case, if the reproduction apparatus cannot appropriately change the reproduction conditions according to the change of audio properties, a mute period or noise is caused at a beginning portion of the song **46,** so that the beginning portion of the song **46** cannot be appropriately reproduced. In addition, intermission information (soundless information) included in Index 0 of the DVD-Audio disc is not copied into the information recording medium 55. That is, information indicating the presence of an interval of songs is lost in the process of copying.

Next, copying of songs from a CD to an information recording medium and reproduction of the copied songs are described. In a CD, the audio properties are always the same for all of the songs recorded therein. Thus, when the songs are copied from the CD to the information recording medium without changing their audio properties, different properties never mixedly exist in a single copied song or in the information recording medium. However, if the audio properties of a song to be copied into the information recording medium are changed by using a compressed coding method for long-time recording, songs having different audio properties may be recorded in one information recording medium. If such a recording medium does not have intermission information between songs, when a reproduction apparatus needs to change its reproduction condition so as to conform to the audio properties of a song to be reproduced, for example, when a plurality of songs are serially reproduced, or when reproduction is started with a selected and searched song, a mute period or noise is caused at a beginning portion of the reproduced song in some reproduction apparatuses. Moreover, information indicating the presence of an interval of songs is lost in the process of copying.

When songs are copied from a CD to an information recording medium by using the same method as that used for copying songs from a CD into a MD, intermission information (soundless information) included in Index 0 of a song stored in the CD is copied into the information recording medium as a part of a previous song at the tail of the previous song. Thus, even when songs are copied from a CD to an information recording medium, the same problems as those described above as for copying of information from a DVD-Audio disc to an information recording medium and reproduction of the copied information occur.

### SUMMARY OF THE INVENTION

According to one aspect of the present invention, there is provided a recording apparatus for recording a first audio content in an information recording medium which can store a plurality of audio contents having a plurality of different audio properties, the first audio content being included in first audio information together with soundless information adjacent to a head of the first audio content, and the information recording medium containing second audio information including a second audio content, wherein the recording apparatus includes: a detecting section for detecting audio properties of the first audio information and determining whether or not the detected audio properties of the first audio information are identical to audio properties of the second audio information; a conversion section for converting audio properties of the soundless information into the same audio properties as the audio properties of the second audio information when the detected audio properties of the first audio information are not identical to the audio properties of the second audio information; and a recording section for recording the soundless information in the information recording medium as a part of the second audio information so as to be adjacent to a tail of the second audio content, and recording the first audio content in the information recording medium.

In one embodiment of the present invention, the recording apparatus further includes a memory buffer for storing at least a portion of the first audio content.

In another embodiment of the present invention, the audio properties include at least one of a sampling frequency, a number of quantization bits, a number of channels, and a coding method.

In still another embodiment of the present invention, the information recording medium is a rewritable or write once type information recording medium.

According to another aspect of the present invention, there is provided a recording apparatus for recording an audio content in an information recording medium which can store a plurality of audio contents having a plurality of different audio properties, wherein the recording apparatus includes: a detecting section for detecting audio properties of the audio content; a memory buffer for storing at least a portion of the audio content; a generating section for generating intermission information having the same audio properties as the detected audio properties of the audio content; and a recording section for recording the intermission information in the information recording medium as a part of audio information, and recording the audio content in the information recording medium as another part of the audio information so as to be adjacent to the tail of the intermission information.

In one embodiment of the present invention, the intermission information is soundless information.

In another embodiment of the present invention, the audio properties include at least one of a sampling frequency, a number of quantization bits, a number of channels, and a coding method.

In still another embodiment of the present invention, the information recording medium is a rewritable or write once type information recording medium.

According to still another aspect of the present invention, there is provided a recording apparatus for recording a first audio content immediately after second audio information including a second audio content in an information recording medium which can store a plurality of audio contents having a plurality of different audio properties, wherein the recording apparatus includes: a detecting section for detecting audio properties of the second audio information; a generating section for generating intermission information having the same audio properties as the detected audio properties of the second audio information; and a recording section for recording the intermission information in the information recording medium as a part of the second audio information so as to be adjacent to a tail of the second audio content, and recording the first audio content in the information recording medium.

In one embodiment of the present invention, the intermission information is soundless information.

In another embodiment of the present invention, the recording apparatus further includes a memory buffer for storing at least a portion of the first audio content.

In still another embodiment of the present invention, the audio properties include at least one of a sampling frequency, a number of quantization bits, a number of channels, and a coding method.

In still another embodiment of the present invention, the information recording medium is a rewritable or write once type information recording medium.

According to still another aspect of the present invention, there is provided a recording method for recording a first audio content in an information recording medium which can store a plurality of audio contents having a plurality of different audio properties, the first audio content being included in first audio information together with soundless information adjacent to a head of the first audio content, and the information recording medium containing second audio information including a second audio content, wherein the recording method includes steps of: detecting audio properties of the first audio information and determining whether or not the detected audio properties of the first audio information are identical to audio properties of the second audio information; converting audio properties of the soundless information into the same audio properties as the audio properties of the second audio information when the detected audio properties of the first audio information are not identical to the audio properties of the second audio information; and recording the soundless information in the information recording medium as a part of the second audio information so as to be adjacent to a tail of the second audio content, and recording the first audio content in the information recording medium.

In one embodiment of the present invention, the recording method further includes a step of storing at least a portion of the first audio content.

In another embodiment of the present invention, the audio properties include at least one of a sampling frequency, a number of quantization bits, a number of channels, and a coding method.

In still another embodiment of the present invention, the information recording medium is a rewritable or write once type information recording medium.

According to still another aspect of the present invention, there is provided a recording method for recording an audio content in an information recording medium which can store a plurality of audio contents having a plurality of different audio properties, wherein the recording method includes steps of: detecting audio properties of the audio content; storing at least a portion of the audio content; generating intermission information having the same audio properties as the detected audio properties of the audio content; and recording the intermission information in the information recording medium as a part of audio information, and recording the audio content in the information recording medium as another part of the audio information so as to be adjacent to the tail of the intermission information.

In one embodiment of the present invention, the intermission information is soundless information.

In another embodiment of the present invention, the audio properties include at least one of a sampling frequency, a number of quantization bits, a number of channels, and a coding method.

In still another embodiment of the present invention, the information recording medium is a rewritable or write once type information recording medium.

According to still another aspect of the present invention, there is provided a recording method for recording a first audio content immediately after second audio information including a second audio content in an information recording medium which can store a plurality of audio contents having a plurality of different audio properties, wherein the recording method includes steps of: detecting audio properties of the second audio information; generating intermission information having the same audio properties as the detected audio properties of the second audio information; and recording the intermission information in the information recording medium as a part of the second audio information so as to be adjacent to a tail of the second audio content, and recording the first audio content in the information recording medium.

In one embodiment of the present invention, the intermission information is soundless information.

In another embodiment of the present invention, the recording method further includes a step of storing at least a portion of the first audio content.

In still another embodiment of the present invention, the audio properties include at least one of a sampling frequency, a number of quantization bits, a number of channels, and a coding method.

In still another embodiment of the present invention, the information recording medium is a rewritable or write once type information recording medium.

In order to solve the above-described problems involved in the conventional techniques, a recording apparatus of the present invention includes: an audio property converter; an audio property detecting section; a memory buffer; and an intermission information generator. In the recording apparatus of the present invention, the audio property converter changes, if necessary, audio properties of intermission information before the intermission information is recorded in an information recording medium. Alternatively, the intermission information generator generates intermission information for insertion into the head or tail of a song.

According to a recording method of the present invention, audio properties of soundless information stored in a source information recording medium (which is a source of songs to be copied) are changed if necessary, and then, the soundless information with changed audio properties is recorded in another information recording medium (destination medium). When soundless information stored in the source information recording medium cannot be utilized, intermission information is newly generated for insertion into the head or tail of a song.

Thus, the invention described herein makes possible the advantages of: (1) providing a recording apparatus and a recording method for recording intermission information in an information recording medium so as to secure a time for a reproduction apparatus to change its reproduction conditions so as to conform to the audio properties of a song to be reproduced; (2) providing a recording apparatus and a recording method for generating intermission information based on intermission information included in an original song and recording the generated intermission information in an information recording medium with a copied song.

These and other advantages of the present invention will become apparent to those skilled in the art upon reading and understanding the following detailed description with reference to the accompanying figures.

### BRIEF DESCRIPTION OF THE DRAWINGS

Figure **1** shows a transition of laser light emitted by an optical pickup.
Figure **2** illustrates copying of audio information from a CD to a MD.
Figure **3** illustrates copying of a series of songs from a DVD-Audio disc to an information recording medium.
Figure **4** illustrates copying of randomly-selected songs from a DVD-Audio disc to an information recording medium.
Figure **5** shows a recording apparatus according to embodiment 1 of the present invention.
Figure **6A** illustrates copying of a plurality of songs having different audio properties according to embodiment 1 of the present invention.
Figure **6B** is a flowchart illustrating recording of songs according to embodiment 1 of the present invention.
Figure **7** illustrates recording of a plurality of songs having different audio properties according to embodiment 1 of the present invention.
Figure **8** shows a logical structure of a disc according to the present invention.
Figure **9** shows a logical structure of pointer information according to the present invention.
Figure **10** shows a recording apparatus according to the present invention.
Figure **11A** illustrates an example of copying of selected songs according to embodiment 2 of the present invention.
Figure **11B** is a flowchart illustrating recording of selected songs according to embodiment 2 of the present invention.
Figure **11C** illustrates another example of copying of selected songs according to embodiment 2 of the present invention.
Figure **11D** is a flowchart illustrating recording of selected songs according to embodiment 2 of the present invention.
Figure **12A** illustrates an example of copying of songs having no soundless information according to embodiment 2 of the present invention.
Figure **12B** illustrates another example of copying of songs having no soundless information according to embodiment 2 of the present invention.

### DESCRIPTION OF THE PREFERRED EMBODIMENTS

Hereinafter, embodiments of the present invention will be described with reference to the drawings. In this specification, a "song" is defined as audio information including at least an audio content. Preferably, a "song" is audio information which includes an audio content and intermission information adjacent to the head or tail of the audio content. "Intermission information" is defined as information provided between contents or songs which represents an interval between contents or songs. Furthermore, a "song" may mean audio information included in a segment which is logically edited as one track based on a disc specification.

An "audio content" is information included in audio information recorded as a song except for intermission information. The audio content includes information of music to be reproduced, etc. "Audio properties" is defined as conditions based on which audio information is structured. For example, the audio properties include at least one of a sampling frequency, a number of quantization bits, a number of channels, and a digital recording method for recording audio information (linear PCM, compression method, or the like). In the embodiments described below, audio information is recorded as songs. However, according to the present invention, the audio information is not limited to music information but may include information of sound, such as voice or the like.

### (Embodiment 1)

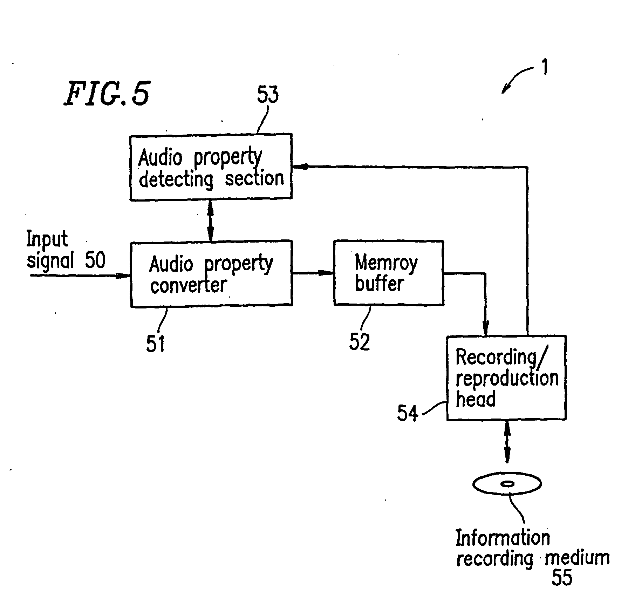

Figure **5** shows a recording apparatus **1** according to embodiment **1** of the present invention. The recording apparatus 1 can record a plurality of audio information having a plurality of different audio properties. In embodiment 1, the recording apparatus **1** records intermission information as a part of a song at the tail of the song. That is, the recording apparatus **1** records intermission information so as to be adjacent to the tail of an audio content of the song. The recording apparatus **1** includes: an audio property converter **51**; a memory buffer **52** for storing at least a portion of audio information; an audio property detecting section **53**; and a recording/reproduction head **54** for recording audio information in an information recording medium, such as an optical head.

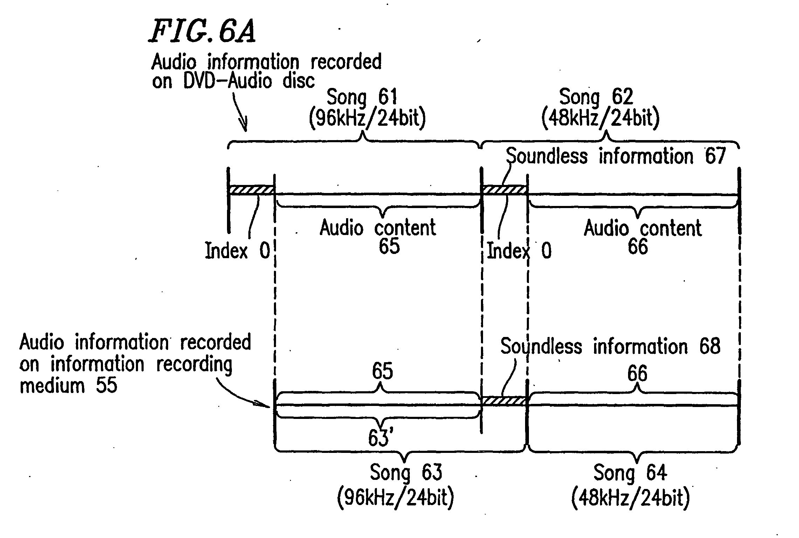

Referring to Figure **6A** in conjunction with Figure **5**, copying of songs by using the recording apparatus **1** is described. In the example illustrated in Figure **6A**, the recording apparatus **1** records a song **61** and a song **62** into an information recording medium **55** as a song **63** and a song **64.** For example, the song **61** and the song **62** to be recorded are stored in a DVD-Audio disc. The information recording medium 55 is a rewritable or write once type information recording medium which can store a plurality of songs having a plurality of different audio properties. When an audio content **65** included in audio information of the song **61** reproduced by a reproduction apparatus is input to the recording apparatus **1** as an input signal **50,** the audio property detecting section **53** detects audio properties of the audio content **65** before the audio content **65** is output from the audio property converter **51.** In this example, the audio property detecting section **53** detects audio properties of 96 kHz and 24 bit as the audio properties of a song **61.** Thereafter, the audio content **65** is recorded in the information recording medium **55** by the recording/reproduction head 54.

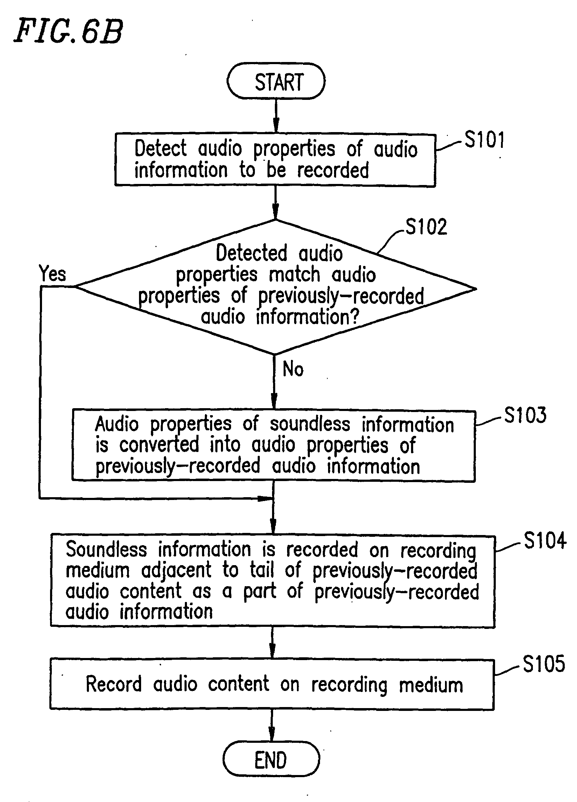

Next, the song **62** is input into the recording apparatus **1**. Referring to a flowchart shown in Figure **6B** in conjunction with Figures **5** and **6A**, when soundless information **67** which is intermission information included in Index 0 of the song **62** is input into the recording apparatus **1,** the audio property detecting section **53** detects audio properties of the soundless information **67** (Step S101) and then compares the detected audio properties of the soundless information **67** with the previously-detected audio properties of the audio content **65** (Step S102). During this detection/comparison operation, an audio content **66** included in the song **62** is temporally stored in the memory buffer **52.** In this example, the audio property detecting section **53** detects audio properties of 48 kHz and **24** bit as the audio properties of the soundless information **67,** and determines that the audio properties of the soundless information **67** are different from the previously-detected audio properties of the audio content **65.** Based on the determination of the audio property detecting section **53,** the audio property converter **51** converts the soundless information **67** into soundless information 68 which has the same audio properties as those of the audio content **65** (96 kHz and 24 bit) (Step S103). The recording/reproduction head **54** records the soundless information **68** as a part of the song **63** so as to be adjacent to the tail of the audio content **65** (Step S104). As a result, the song **63** includes the audio content **65** and the soundless information **68** which have the same audio properties. Next, an audio content **66** of the song **62** is recorded into the information recording medium **55** as the song **64** (Step S105). The song **64** is recorded into the information recording medium **55** such that the song **64** is reproduced immediately after a song **63.**

Next, another example where soundless information **68** and an audio content **66** are recorded into an information recording medium **55,** in which a song **63'** including an audio content **65** has been previously recorded, in an area immediately after the previously-recorded audio content **65** is described. In this example, the recording/reproduction head **54** reads the audio content **65** from the information recording medium **55,** and the audio property detecting section **53** detects audio properties of the read audio content **65** (96 kHz and 24 bit). Then, as described above, when soundless information **67** included in Index 0 of the song **62** is input into the recording apparatus **1**, the audio property detecting section **53** detects audio properties of the soundless information **67** and then compares the detected audio properties of the soundless information **67** with the previously-detected audio properties of the audio content **65.** During this detection/comparison operation, an audio content **66** included in the song **62** is temporally stored in the memory buffer **52.** In this example, the audio property detecting section **53** detects audio properties of 48 kHz and **24** bit as the audio properties of the soundless information **67,** and determines that the audio properties of the soundless information **67** are different from the previously-detected audio properties of the audio content **65.** Based on the determination of the audio property detecting section **53,** the audio property converter **51** converts the soundless information **67** into soundless information **68** which has the same audio properties as those of the audio content **65** (96 kHz and 24 bit). The recording/reproduction head **54** records the soundless information **68** as a part of the song **63** so as to be adjacent to the tail of the audio content **65.** As a result, the song **63** includes the audio content **65** and the soundless information **68** which have the same audio properties. Next, an audio content **66** of the song **62** is recorded into the information recording medium **55** as the song **64.** The song **64** is recorded into the information recording medium **55** such that the song **64** is reproduced immediately after the song **63.**

When the soundless information **67** and the audio content **65** have the same audio properties, the soundless information **67** is recorded without being converted in the information recording medium **55** as a part of the song **63** so as to be adjacent to the tail of the audio content **65**. In this case, the song **63** includes the audio content **65** and the soundless information **67** which have the same audio properties.

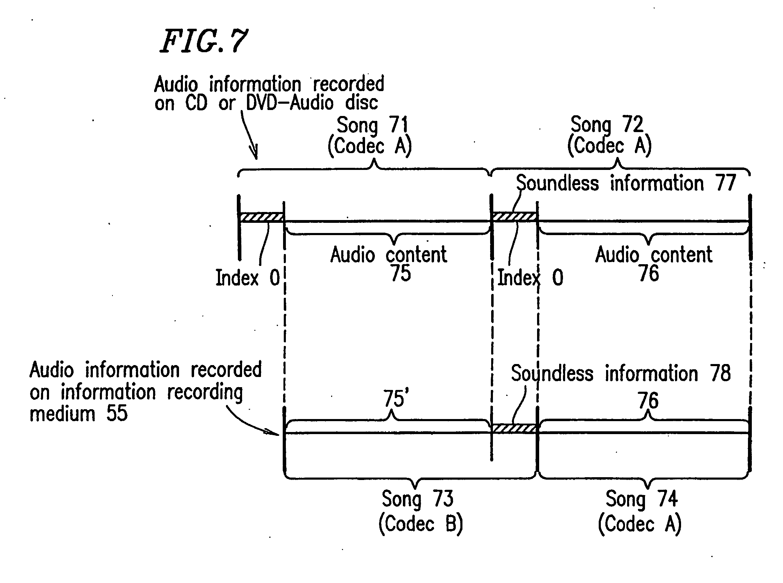

Next, an example of recording where songs are recorded in an information recording medium so as to have different audio properties is described with reference to Figure **7** in conjunction with Figure **5**. In the example illustrated in Figure **7**, a song **71** and a song **72** recorded in a CD or a DVD-Audio disc have the same audio properties, but the song **71** and the song **72** are recorded in the information recording medium **55** as a song **73** and a song **74** which have different audio properties. The audio properties of the audio content **75** included in the song **71** which is input to the recording apparatus **1** are converted by the audio property converter **51** into different audio properties, whereby an audio content **75'**is generated. The audio property detecting section **53** detects the audio properties of the audio content **75'** before the audio content **75'** is recorded in the information recording medium **55**. For example, the audio property detecting section **53** detects that the audio content **75'** was compressed by a compression method called "Codec B" . Thereafter, when soundless information **77** included in Index 0 of the song **72** is input into the audio property converter **51,** the audio property detecting section **53** detects that the soundless information **77** was compressed by a compression method called "Codec A". Since the audio content **75'** and the soundless information **77** have different audio properties, the audio property converter **51** converts the soundless information **77** having the audio property of "Codec A" into soundless information **78** having the audio property of "Codec B" so as to conform to the audio content **75'.** The recording/reproduction head **54** records the soundless information **78** in the information recording medium **55** as a part of the song **73** so as to be adjacent to the tail of the audio content **75'.** As a result, the song **73** includes the audio content **75'** and the soundless information **78** which have the same audio properties. Next, an audio content **76** of the song **72** is recorded into the information recording medium **55** as the song **74.** The song **74** is recorded into the information recording medium **55** such that the song **74** is reproduced immediately after the song **73.**

According to embodiment 1 of the present invention, the recording apparatus **1** does not need to newly generate intermission information for recording in the information recording medium **55** so as to be adjacent to the head or tail of an audio content. Furthermore, a single song can be prevented from mixedly including a plurality of different audio properties.

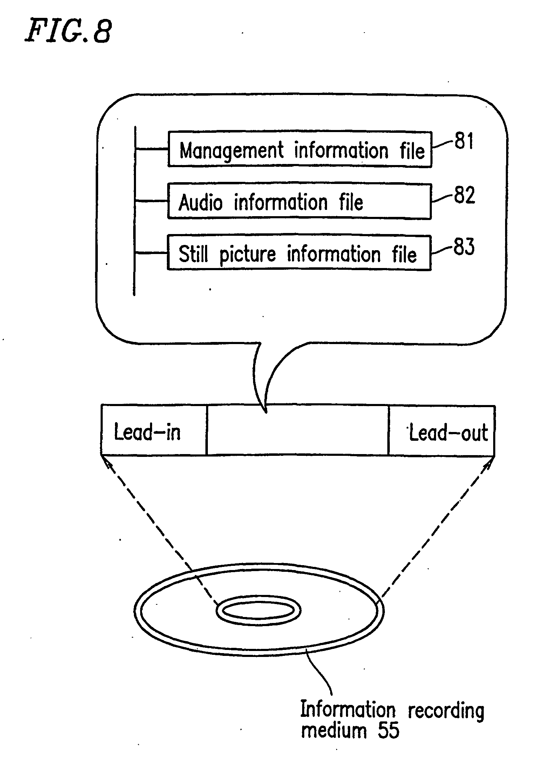

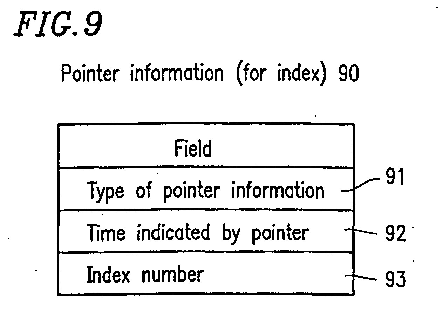

Next, an example where the information recording medium 55 is a DVD-RAM, DVD-RW, or DVD-R disc, and the recording apparatus **1** records audio information in the DVD-RAM, DVD-RW, or DVD-R disc is described in detail. As shown in Figure **8,** a DVD-RAM disc, a DVD-RW disc, and a DVD-R disc include an audio information file **82** for recording audio information, a still picture information file **83** for recording still picture information, and a management information file **81** for recording management information which is used for managing the audio information and the still picture information. The management information file **81** includes pointer information **90** as shown in Figure **9** which indicates the head of an index. The "index" is defined as one of the regions obtained by logically dividing an area occupied by a single song. The pointer information **90** includes a type **91** of pointer information, a time (time information) **92** indicated by the pointer, and an index number **93**. According to embodiments of the present invention, at least a part of the pointer information **90** is changed or generated by the audio property converter **51** according to a transfer of intermission information or generation of intermission information.

As described above, in the case where intermission information is recorded as a part of a song, the intermission information is recorded within a single index. Pointer information **90** of the index in which the intermission information is recorded includes: an identifier indicating the index as the type **91** of pointer information; a reproduction end time of an audio content included in the song as the time (time information) **92** indicated by the pointer; and a value which is a previous index number plus 1 as the index number **93.**

In embodiment 1, the recording apparatus **1** includes the audio property detecting section 53 for detecting audio properties. However, if the recording apparatus **1** can read a management information file **81** of audio information to be recorded by the recording apparatus **1,** it is possible to identify audio properties of the audio information to be recorded from audio properties included in the management information file **81.** Thus, in such a case, the audio property detecting section **53** may be omitted.

### (Embodiment 2)

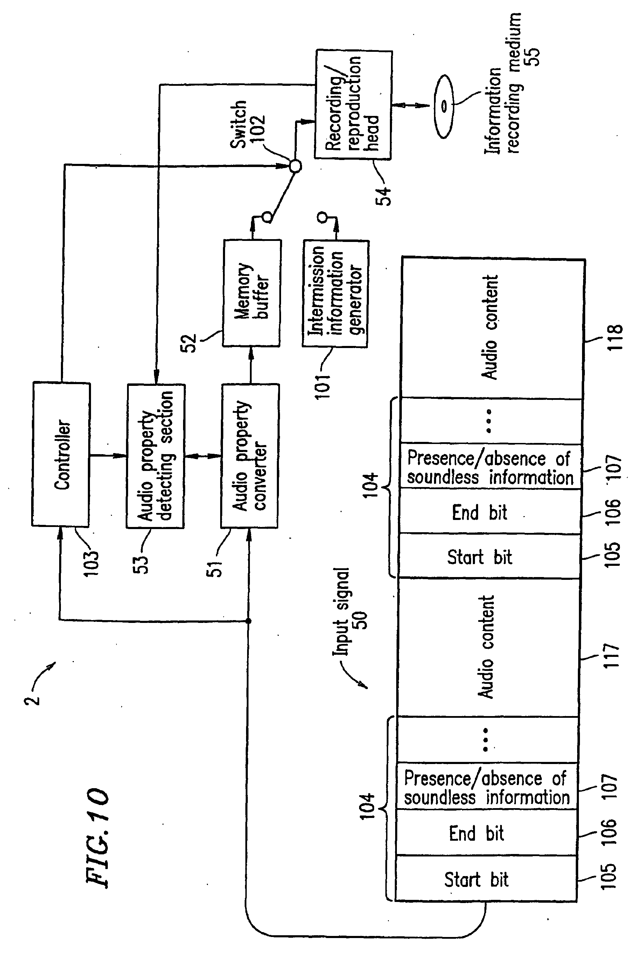

Figure **10** shows a recording apparatus **2** according to the present invention. The recording apparatus **2** can record a plurality of audio information having a plurality of different audio properties. In embodiment 2, the recording apparatus **2** newly generates intermission information and records the generated intermission information in an information recording medium **55.** The recording apparatus **2** includes: an audio property converter **51;** a memory buffer **52**; an audio property detecting section **53;** recording/reproduction head **54;** an intermission information generator **101;** a switch **102;** and a controller **103** for controlling at least the audio property detecting section **53** and the switch **102.**

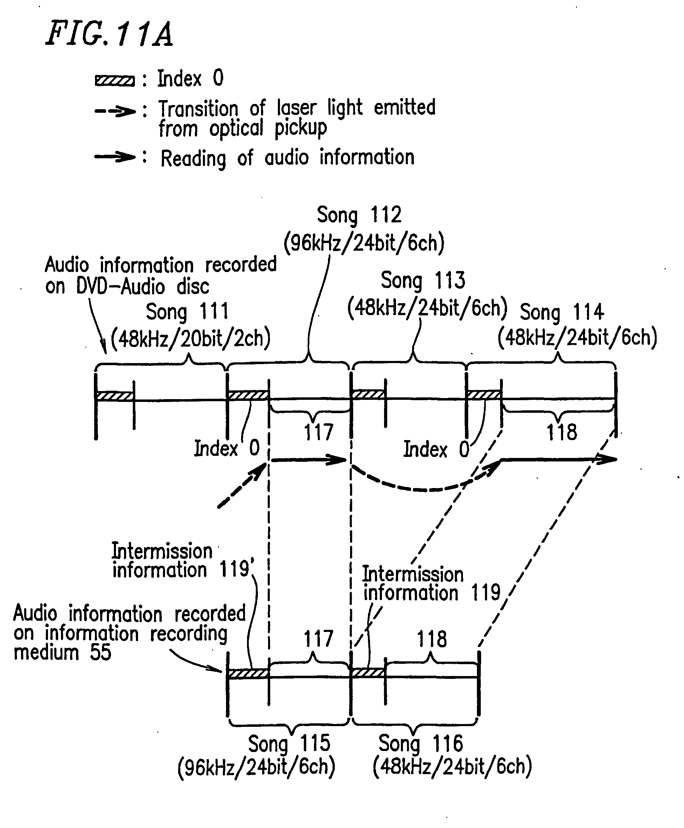

With reference to Figure **10** and Figures **11A** through **11D**, an example of automatic recording of the recording apparatus **2** is described. In this example, after a reproduction apparatus starts to read audio information from a CD or a DVD-Audio disc, the recording apparatus **2** automatically starts to record the audio information read by the reproduction apparatus into an information recording medium **55.**

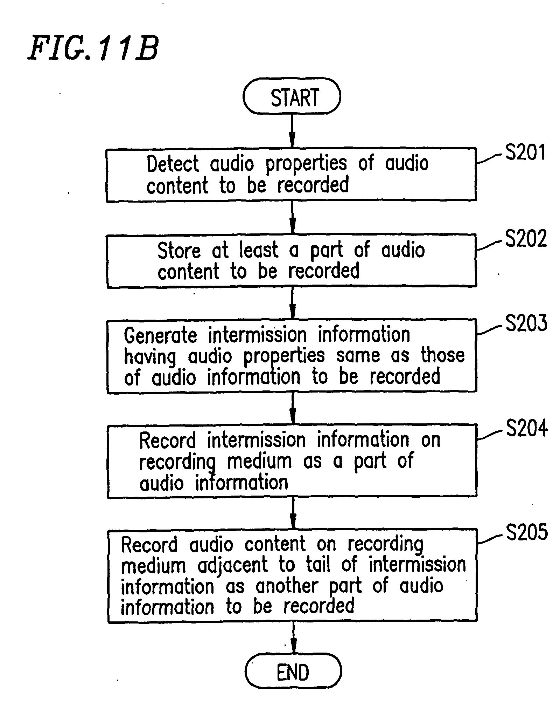

For example, as shown in Figure **11A,** a song **112** and a song **114** are recorded in the information recording medium **55** as a song **115** and a song **116,** respectively. When the song **112** and the song **114** are reproduced, in many reproduction apparatuses, only audio contents **117** and **118** are reproduced while Index 0 of the song **112** and Index 0 of the song **114** are skipped. Accordingly, after the audio content **117** of the song 112 is recorded in the information recording medium **55** as the song **115,** the audio content **118** of the song **114** is input to the recording apparatus **2.** The audio property detecting section **53** detects audio properties of the audio content **118,** and the audio content **118** is buffered in the memory buffer **52** (Steps S201 and **S202** in Figure **11B**). While the audio content **118** is buffered in the memory buffer **52**, the intermission information generator **101** generates intermission information **119** having the same audio properties as the detected audio properties of the audio content **118** (Step S203). The controller **103** controls the switch **102** so as to connect to the intermission information generator **101** so that the intermission information **119** is recorded in the information recording medium **55** as a part of the song **116** (Step S204). After the recording of the intermission information **119** is completed, the controller **103** controls the switch **102** so as to connect to the memory buffer **52** so that the audio content **118,** at least a part of which is buffered in the memory buffer **52,** is recorded in the information recording medium **55** so as to be adjacent to the tail of the intermission information **119** (Step S205). The song **116** is recorded into the information recording medium **55** such that the song **116** is reproduced immediately after the song **115.** As shown in Figure **10,** an input signal **50** supplied to the recording apparatus **2** includes the audio contents **117** and **118** of the songs **112** and **114,** and control information **104** for the audio contents **117** and **118.** The control information **104** includes a start bit **105,** an end bit **106,** presence/absence **107** of soundless information, etc., for each of the audio contents **117** and **118.** The controller **103** determines from the start bit **105** and the end bit **106** the timing at which the audio property detecting section **53** detects audio properties and the timing of turning the switch **102**, and gives these determined timings to the audio property detecting section **53** and the switch **102,** respectively, such that each of the audio property detecting section **53** and the switch **102** operates at the optimum timing.

In this way, the intermission information **119** and the audio content **118** are recorded in the information recording medium **55** so as to generate audio information (i.e., song **116**) where the newly-generated intermission information **119** is adjacent to the audio content **118** as shown in Figure **11A.**

The intermission information in embodiment 2, e.g., the intermission information **119,** may be soundless information.

It should be noted that intermission information **119'** may be recorded at the head of the song **115** similarly to the intermission information **119** (see Figure **11A**). The intermission information **119'** has the same audio properties as those of the audio content **117.**

When the intermission information **119** is recorded at the head of the song **116,** the intermission information **119** is recorded within a single index. In this case, the pointer information (see Figure **9**) of the index in which the intermission information **119** is stored includes: an identifier indicating the index as the type **91** of pointer information; a reproduction start time of the intermission information **119** as the time (time information) **92** indicated by the pointer; and value "0" as the index number **93.**

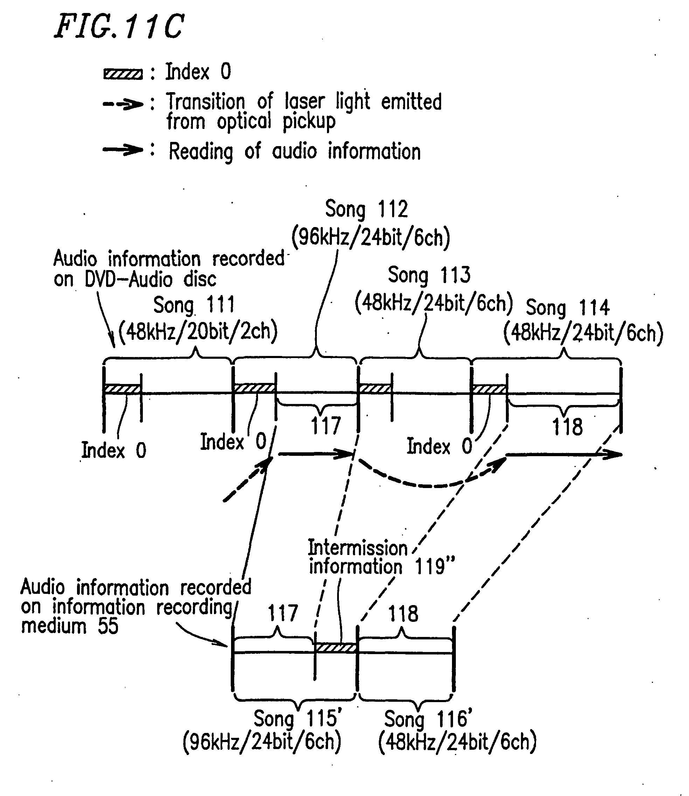

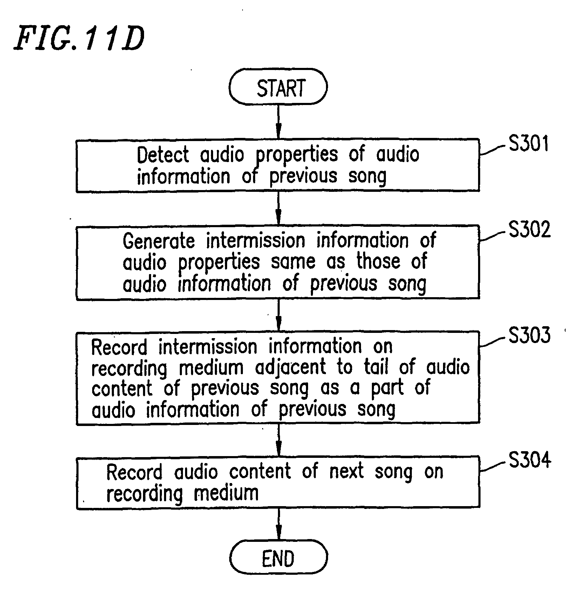

In the above example illustrated in Figures **11A** and **11B,** intermission information is recorded at the head of a song. Next, an example where intermission information is recorded at the tail of a song is described with reference to Figures **11C** and **11D** in conjunction with Figure **10.** In the example illustrated in Figure **11C,** intermission information **119"** is recorded so as to be adjacent to the tail of an audio content **117** of a previous song (song **115'**) as shown in Figure **11C.**

In the first place, audio properties of the audio content **117** input into the recording apparatus **2** are detected by the audio property detecting section **53** (Step S301). The switch **102** is connected to the memory buffer **52** so that the audio content **117** is recorded in the information recording medium **55.** Thereafter, the intermission information generator **101** generates intermission information **119"** having the same audio properties as the detected audio properties of the audio content **117** (Step S302). The switch **102** is connected to the intermission information generator **101** so that the intermission information **119"** is recorded in the information recording medium **55** so as to be adjacent to the tail of the previously-recorded audio content **117** (Step S303). Even if an audio content **118** of the song **114** is input into the recording apparatus 2 during the recording of the intermission information **119"**, the audio content **118** is buffered in the memory buffer **52** until the recording of the intermission information **119"** is completed. After the recording of the intermission information **119"** is completed, the switch **102** is connected to the memory buffer **52** so that the audio content **118** buffered in the memory buffer **52** is recorded in the information recording medium **55** as a song **116'** (Step S304). The song **116'** can be recorded in the information recording medium **55** such that the song **116'** is reproduced immediately after the song **115'.**

The song **115'** including the audio content **117** may be previously recorded in the information recording medium **55**.

Even when a recording operation ends at the end of the recording of the song **115'** so that the song **116'** is not recorded in the information recording medium **55** (e.g., when only the song **115'** is recorded in the information recording medium **55**), the intermission information **119"** may be recorded at the tail of the song **115'.**

As described above, the intermission information **119"** is recorded so as to be adjacent to the tail of the audio content **117** which has been previously recorded in the information recording medium **55,** whereby audio information including the audio content **117** and the intermission information **119"** (i.e., song **115'**) is recorded in the information recording medium **55.** The intermission information **119"** may be soundless information. The song **115'** includes the same pointer information as that described in embodiment 1.

According to embodiment 2, even if any type of reproduction apparatus is used, intermission information which indicates an interval between songs as well as audio contents of songs can be recorded in the information recording medium **55.**

In embodiment 2, the recording apparatus **2** includes the audio property detecting section **53** for detecting audio properties. However, if the recording apparatus **2** can read a management information file **81** (Figure **8**) of audio information to be recorded by the recording apparatus 2, it is possible to identify audio properties of the audio information to be recorded from audio properties included in the management information file **81**. Thus, in such a case, the audio property detecting section **53** may be omitted.

### (Embodiment 3)

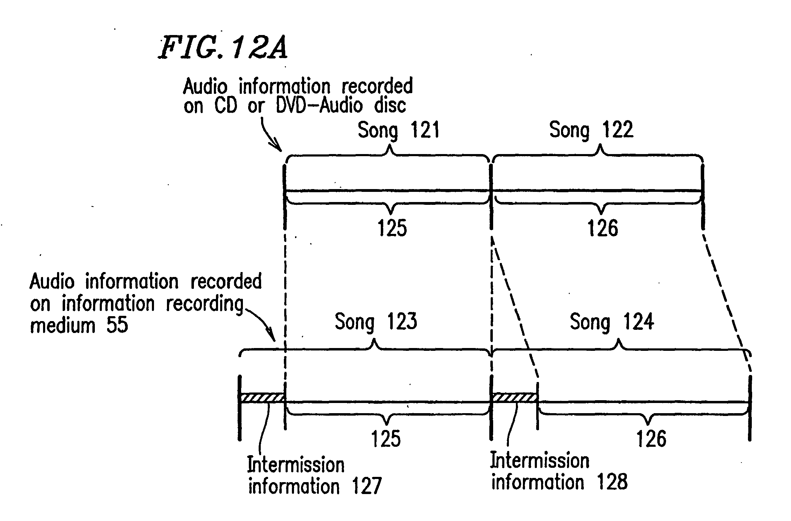

In embodiment 3, recording of a song in which Index 0 is not defined into an information recording medium **55** is described. As shown in Figure **12A**, in each of songs **121** and **122** stored in a CD or a DVD-Audio disc, Index 0 is not defined.

First, an example where - intermission information **127** and **128** are inserted at the heads of songs **123** and **124,** respectively, is described with reference to Figure **12A** in conjunction with Figure **10.** For example, the recording apparatus **2** of Figure **10** records the songs **121** and **122** read out from the CD or DVD-Audio disc into the information recording medium **55** as the songs **123** and **124,** respectively, as shown in Figure **12A**.

After recording of an audio content **125** of the song **121** into the information recording medium **55** is completed, an audio content **126** of the song **122** is input into the recording apparatus **2**, and the audio property detecting section **53** detects audio properties of the audio content **126.** Then, at least a portion of the audio content **126** is buffered in the memory buffer **52.** While the audio content **126** is buffered in the memory buffer **52,** the intermission information generator **101** generates intermission information **128** having the same audio properties as the detected audio properties of the audio content **126.** Then, the switch **102** is connected to the intermission information generator **101** so that the intermission information **128** is recorded in the information recording medium **55** as a part of the song **124.** After the recording of the intermission information **128** is completed, the switch **102** is connected to the memory buffer **52** so that the buffered portion of the audio content **126** and the remainder of the audio content **126** are recorded subsequent to the intermission information **128** in the information recording medium **55.** As a result, audio information including the intermission information **128** and the audio content **126** (i.e., song **124**) is obtained in the information recording medium 55. The song **124** is recorded into the information recording medium **55** such that the song **124** is reproduced immediately after the song **123.** The intermission information **128** may be soundless information. The song **124** includes the same pointer information as that described in an example of embodiment 2 where intermission information is recorded at the head of a song.

It should be noted that intermission information **127** may be recorded at the head of the song **123** similarly to the intermission information **128.** The intermission information **127** has the same audio properties as those of the audio content **125.**

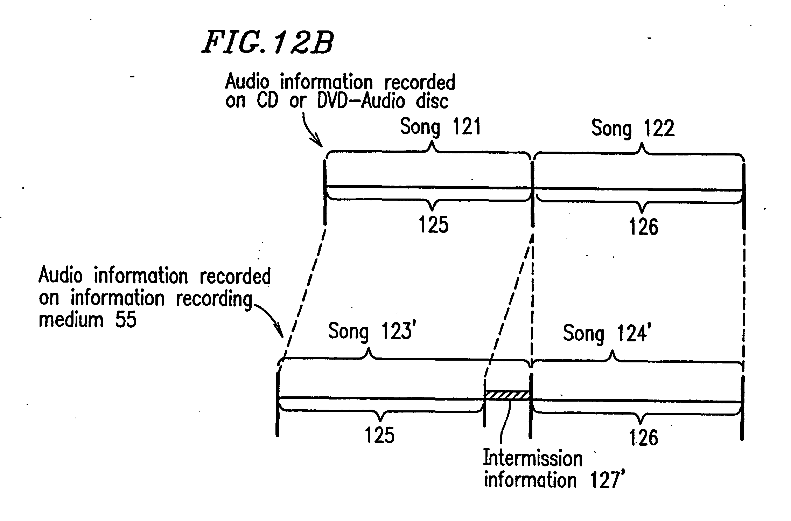

Next, an example where intermission information is recorded so as to be adjacent to the tail of an audio content is described with reference to Figure **12B** in conjunction with Figure **10.** In the example illustrated in Figure **12B,** intermission information **127'** is recorded at the tail of a song **123'.**

In the first place, audio properties of the audio content **125** input into the recording apparatus **2** are detected by the audio property detecting section **53.** The switch **102** is connected to the memory buffer **52** so that the audio content **125** is recorded in the information recording medium **55.** Thereafter, the intermission information generator **101** generates intermission information **127'** having the same audio properties as the detected audio properties of the audio content **125.** Then, the switch **102** is connected to the intermission information generator **101** so that the intermission information **127'** is recorded in the information recording medium **55** so as to be adjacent to the tail of the audio content **125.** Even if an audio content **126** of the song **122** is input into the recording apparatus **2** during the recording of the intermission information **127',** the audio content **126** is buffered in the memory buffer **52** until the recording of the intermission information **127'** is completed. After the recording of the intermission information **127'** is completed, the switch **102** is connected to the memory buffer **52** so that the audio content **126** buffered in the memory buffer **52** is recorded in the information recording medium **55** as a song **124'** so as to be adjacent to the tail of the intermission information **127'.** The song **124'** can be recorded in the information recording medium **55** such that the song **124'** is reproduced immediately after the song **123'.** The song **123'** includes the same pointer information as that described in embodiment 1 (see Figure **9**).

According to embodiment 3, even when songs to be recorded do not have intermission information therebetween, intermission information can be newly generated and recorded in an information recording medium **55** together with audio contents of the songs.

In embodiment 3, the recording apparatus **2** includes the audio property detecting section **53** for detecting audio properties. However, if the recording apparatus **2** can read a management information file **81** (Figure **8**) of audio information to be recorded by the recording apparatus **2**, it is possible to identify audio properties of the audio information to be recorded from audio properties included in the management information file **81.** Thus, in such a case, the audio property detecting section **53** may be omitted.

According to the present invention, the information recording medium **55** is not limited to an optical disc medium, but may be any type of recording medium so long as it can store a plurality of songs having a plurality of different audio properties. For example, the information recording medium 55 may be a tape-shaped recording medium, a hard disk, a semiconductor memory, or the like.

According to the present invention, there is provided a recording apparatus by which audio properties of intermission information adjacent to the head of an audio content to be recorded are converted to the same audio properties as those of previously-recorded audio information in an information recording medium, and the intermission information including the converted audio properties is recorded in the information recording medium as a part of the previously-recorded audio information so as to be adjacent to an audio content included in the previously-recorded audio information. The resultant audio information in the information recording medium includes the audio content and the intermission information which have the same audio properties. Thus, audio information recorded in an information recording medium by using the recording apparatus of the present invention can be appropriately reproduced without causing a mute period or noise during the reproduction thereof. Further, in an information recording medium storing audio contents recorded by the recording apparatus of the present invention, even when a plurality of audio contents having different audio properties are serially reproduced, a sufficient time is secured for a reproduction apparatus to change its reproduction conditions so as to follow a change of audio properties during reproduction of the audio contents. Thus, the audio contents can be appropriately reproduced without causing a mute period or noise during the reproduction of a beginning portion of each audio content.

According to the present invention, there is provided a recording apparatus by which intermission information having the same audio properties as those of an audio content to be recorded is newly generated and recorded in an information recording medium as a part of newly-recorded audio information, and the audio content to be recorded is recorded as another part of the newly-recorded audio information so as to be adjacent to the tail of the newly-generated intermission information. Thus, even when intermission information is not externally supplied to the recording apparatus of the present invention, the recording apparatus of the present invention can newly generate intermission information and record the generated intermission information between audio contents. In an information recording medium storing audio contents recorded by the recording apparatus of the present invention, even when a plurality of audio contents having different audio properties are serially reproduced, a sufficient time is secured for a reproduction apparatus to change its reproduction conditions so as to follow a change of audio properties during reproduction of the audio contents. Thus, the audio contents can be appropriately reproduced without causing a mute period or noise during the reproduction of a beginning portion of each audio content. As described above, according to the present invention, even when intermission information included in a song to be copied is not input into a recording apparatus, intermission information can be newly-generated and recorded between copied audio contents. According to the present invention, when audio contents having a plurality of different audio contents are recorded in an information recording medium, audio properties of an audio content to be recorded are detected, and intermission information having the same audio properties as those of the audio content to be recorded among various audio properties compatible with the information recording medium is generated. The generated intermission information is recorded in the information recording medium so as to be adjacent to the head of the audio content to be recorded.

According to the present invention, there is provided a recording apparatus by which intermission information having the same audio properties as those of an audio content included in previously-recorded audio information in an information recording medium is newly generated and recorded in the information recording medium as a part of the previously-recorded audio information so as to be adjacent to the tail of the audio content included in the previously-recorded audio information, and then, further audio content is recorded in the information recording medium as further audio information. Thus, even when intermission information is not externally supplied to the recording apparatus of the present invention, the recording apparatus of the present invention can newly generate intermission information and record the generated intermission information between audio contents. In an information recording medium storing audio contents recorded by the recording apparatus of the present invention, even when a plurality of audio contents having different audio properties are serially reproduced, a sufficient time is secured for a reproduction apparatus to change its reproduction conditions so as to follow a change of audio properties during reproduction of the audio contents. Thus, the audio contents can be appropriately reproduced without causing a mute period or noise during the reproduction of a beginning portion of each audio content. As described above, according to the present invention, even when intermission information included in a song to be copied is not input into a recording apparatus, intermission information can be newly-generated and recorded between copied audio contents.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A recording apparatus for recording a first audio content in an information recording medium which can store a plurality of audio contents having a plurality of different audio properties, the first audio content being included in first audio information together with soundless information adjacent to a head of the first audio content, and the information recording medium containing second audio information including a second audio content,
wherein the recording apparatus includes:
a detecting section for detecting audio properties of the first audio information and determining whether or not the detected audio properties of the first audio information are identical to audio properties of the second audio information;
a conversion section for converting audio properties of the soundless information into the same audio properties as the audio properties of the second audio information when the detected audio properties of the first audio information are not identical to the audio properties of the second audio information; and
a recording section for recording the soundless information in the information recording medium as a part of the second audio information so as to be adjacent to a tail of the second audio content, and recording the first audio content in the information recording medium.

2. A recording apparatus according to claim 1, further comprising a memory buffer for storing at least a portion of the first audio content.

3. A recording apparatus according to claim 1, wherein the audio properties include at least one of a sampling frequency, a number of quantization bits, a number of channels, and a coding method.

4. A recording apparatus according to claim 1, wherein the information recording medium is a rewritable or write once type information recording medium.

5. A recording apparatus for recording an audio content in an information recording medium which can store a plurality of audio contents having a plurality of different audio properties,
wherein the recording apparatus includes:
a detecting section for detecting audio properties of the audio content;
a memory buffer for storing at least a portion of the audio content;
a generating section for generating intermission information having the same audio properties as the detected audio properties of the audio content; and
a recording section for recording the intermission information in the information recording medium as a part of audio information, and recording the audio content in the information recording medium as another part of the audio information so as to be adjacent to the tail of the intermission information.

6. A recording apparatus according to claim 5, wherein the intermission information is soundless information.

7. A recording apparatus according to claim 5, wherein the audio properties include at least one of a sampling frequency, a number of quantization bits, a number of channels, and a coding method.

8. A recording apparatus according to claim 5, wherein the information recording medium is a rewritable or write once type information recording medium.

9. A recording apparatus for recording a first audio content immediately after second audio information including a second audio content in an information recording medium which can store a plurality of audio contents having a plurality of different audio properties,
wherein the recording apparatus includes:
a detecting section for detecting audio properties of the second audio information;
a generating section for generating intermission information having the same audio properties as the detected audio properties of the second audio information; and
a recording section for recording the intermission information in the information recording medium as a part of the second audio information so as to be adjacent to a tail of the second audio content, and recording the first audio content in the information recording medium.

10. A recording apparatus according to claim 9, wherein the intermission information is soundless information.

11. A recording apparatus according to claim 9, further comprising a memory buffer for storing at least a portion of the first audio content.

12. A recording apparatus according to claim 9, wherein the audio properties include at least one of a sampling frequency, a number of quantization bits, a number of channels, and a coding method.

13. A recording apparatus according to claim 9, wherein the information recording medium is a rewritable or write once type information recording medium.

14. A recording method for recording a first audio content in an information recording medium which can store a plurality of audio contents having a plurality of different audio properties, the first audio content being included in first audio information together with soundless information adjacent to a head of the first audio content, and the information recording medium containing second audio information including a second audio content,
wherein the recording method includes steps of:
detecting audio properties of the first audio information and determining whether or not the detected audio properties of the first audio information are identical to audio properties of the second audio information:
converting audio properties of the soundless information into the same audio properties as the audio properties of the second audio information when the detected audio properties of the first audio information are not identical to the audio properties of the second audio information; and
recording the soundless information in the information recording medium as a part of the second audio information so as to be adjacent to a tail of the second audio content, and recording the first audio content in the information recording medium.

15. A recording method according to claim 14, further comprising a step of storing at least a portion of the first audio content.

16. A recording method according to claim 14, wherein the audio properties include at least one of a sampling frequency, a number of quantization bits, a number of channels, and a coding method.

17. A recording method according to claim 14, wherein the information recording medium is a rewritable or write once type information recording medium.

18. A recording method for recording an audio content in an information recording medium which can store a plurality of audio contents having a plurality of different audio properties, .
wherein the recording method includes steps of:
detecting audio properties of the audio content;
storing at least a portion of the audio content;
generating intermission information having the same audio properties as the detected audio properties of the audio content; and
recording the intermission information in the information recording medium as a part of audio information, and recording the audio content in the information recording medium as another part of the audio information so as to be adjacent to the tail of the intermission information.

19. A recording method according to claim 18, wherein the intermission information is soundless information.

20. A recording method according to claim 18, wherein the audio properties include at least one of a sampling frequency, a number of quantization bits, a number of channels, and a coding method.

21. A recording method according to claim 18, wherein the information recording medium is a rewritable or write once type information recording medium.

22. A recording method for recording a first audio content immediately after second audio information including a second audio content in an information recording medium which can store a plurality of audio contents having a plurality of different audio properties,
wherein the recording method includes steps of:
detecting audio properties of the second audio information;
generating intermission information having the same audio properties as the detected audio properties of the second audio information; and
recording the intermission information in the information recording medium as a part of the second audio information so as to be adjacent to a tail of the second audio content, and recording the first audio content in the information recording medium.

23. A recording method according to claim 22, wherein the intermission information is soundless information.

24. A recording method according to claim 22, further comprising a step of storing at least a portion of the first audio content.

25. A recording method according to claim 22, wherein the audio properties include at least one of a sampling frequency, a number of quantization bits, a number of channels, and a coding method.

26. A recording method according to claim 22, wherein the information recording medium is a rewritable or write once type information recording medium.
